# EUROPÄISCHE PATENTANMELDUNG

(11) **EP 0 741 016 A2**
(43) Veröffentlichungstag der Anmeldung: **06.11.1996**
(21) Anmeldenummer: 96810279.8
(22) Anmeldetag: 01.05.1996
(51) Int. Cl.: B41F 13/18

(54) **Presswalze**

(30) Priorität: 05.05.1995 CH 1299/95
(71) Anmelder: De Pretto-Escher Wyss s.r.l., 36015 Schio (Vicenza) (IT)
(72) Erfinder: Schnyder, Eugen, 5622 Waltenschwil (CH); Machguth, Günther, 8116 Würenlos (CH); Gasser, Egon, 8409 Winterthur (CH)
(74) Vertreter: Trieblnig, Adolf

(57) **Zusammenfassung**

Die Presswalze (1) enthält einen feststehenden Träger (5) und einen rotierenden, elastisch verformbaren Walzenmantel (6), der mit einer Gegenwalze (2) zusammenwirkt und der über eine hydrostatische Stützanordnung (20) auf dem Träger (5) abgestützt und mit seiner Innenfläche über eine konkave Stützfläche (24) in Umfangsrichtung beweglich geführt ist. Der Walzenmantel (6) ist mit einer in radialer Richtung flexiblen Wandung ausgeführt, welche an die Gegenwalze (2) auf einer Pressstelle (3) anschmiegbar ist, deren Breitenabmessung in Umfangsrichtung innerhalb eines Bereiches von mindestens 8 mm bis ca. 40 mm einstellbar ist. Der Walzenmantel (6) besteht ferner zumindest teilweise aus einem elektrisch leitfähigen Material, um eine unkontrollierte elektrostatische Aufladung der Manteloberfläche zu verhindern. Entsprechend wird eine von elektrostatischen Hilfseinrichtungen freie oder zumindest unter reduzierter elektrostatischer Aufladung erzielbare Behandlung einer Warenbahn, z.B. eine vereinfachte Uebertragung von Druckfarbe auf ein Druckgut, erreicht.

## Beschreibung

Die Erfindung betrifft eine Presswalze entsprechend dem Oberbegriff des Anspruchs 1.

Presswalzen der genannten Art werden häufig in Druckwerken, insbesondere in Tiefdruckwerken, als Presseurwalzen eingesetzt, die jeweils mit einem Formzylinder zusammenwirken. Eine bekannte Presswalze dieser Art ist mit einem hochelastischen Walzenmantel in Form eines Hohlzylinders aus Polyurethan oder Elastomer ausgeführt, der Durchbiegungen quer zu seiner Längsachse zulässt und der einen im wesentlichen formstabilen Querschnitt aufweist (K.-A. Springstein, "Die Spitzenqualität im Tiefdruck hängt auch vom Presseursystem ab", Sonderdruck aus dem Fachmagazin "Deutscher Drucker", Nr. 28 vom 15.09.1988). Der Walzenmantel der bekannten Presswalze wird über hydrostatische Stützelemente an den Formzylinder angepresst, wobei sich eine im wesentlichen linienförmige Pressstelle mit relativ geringer Ausdehnung in Umfangsrichtung des Walzenmantels bildet. Dabei kann in einer durch Zusammendrücken des Walzenmantels entstehenden Walkzone die Pressstelle soweit verbreitert werden, dass ein Druckstreifen mit einer Breite von ca. 10 bis 18 mm gebildet wird. Im Bereich dieses Druckstreifens muss in einem Druckwerk jeweils die auf den Formzylinder aufgebrachte Farbe auf das zu bedruckende Druckgut übertragen werden. Um bei einem Tiefdruckwerk bei einer Druckgeschwindigkeit von z.B. 15 - 20 m / Sek. eine zuverlässige Farbübertragung zu gewährleisten, ist es bekannt, den Walzenmantel mit einer indirekten oder einer direkten elektrostatischen Druckhilfe (ESA) zu versehen. Diese bekannten Druckhilfen sind an sich relativ aufwendige und pflegeintensive Systeme. Zur Erzielung einer hohen Druckqualität ist es ferner wesentlich, dass die Breite des Druckstreifens während des Druckvorganges konstant bleibt. Bei bisherigen Presswalzen der genannten Art können in bestimmten Fällen, z.B. beim Bedrucken von Druckgut mit unterschiedlich dicken Längenabschnitten, aufgrund von Laständerungen im Bereich der Walkzone, entsprechend unterschiedliche tangentiale Kräfte auf die einzelnen Längenabschnitte einwirken, wobei sich die jeweils wirksame Breite des Druckstreifens verändern kann und damit Verzerrungen des Druckgutes auftreten können, durch welche die Qualität der Farbübertragung beeinträchtigt werden kann.

Der Erfindung liegt die Aufgabe zugrunde, eine weiterentwickelte, für unterschiedliche Verwendungen geeignete Presswalze der eingangs genannten Art zu schaffen, welche die Bildung einer Pressstelle mit einer von der jeweiligen Belastung unabhängig einstellbaren, konstanten Spaltbreite ermöglicht und eine gezielte Beeinflussung der für eine Behandlung nutzbaren Verweilzeit einer die Pressstelle durchlaufenden Warenbahn gestattet, und welche auch bei einer Durchlaufgeschwindigkeit von 20 m / Sek. oder mehr eine von elektrostatischen Hilfseinrichtungen freie oder bei zumindest reduzierter elektrostatischer Aufladung erzielbare Behandlung der Warenbahn gewährleistet.

Diese Aufgabe wird erfindungsgemäss durch die im kennzeichnenden Teil des Patentanspruchs 1 angegebenen Merkmale gelöst.

Durch den in radialer Richtung flexiblen Walzenmantel der erfindungsgemäss ausgebildeten Presswalze ist zwischen dieser und der Gegenwalze ein Pressspalt erzielbar, dessen Breite, im Vergleich mit bisherigen Ausführungen, innerhalb eines grösseren Umfangsbereichs der Gegenwalze frei wählbar ist, wobei diese Breite ein Mehrfaches der bei bisherigen Ausführungen möglichen Spaltbreiten betragen kann. Entsprechend kann eine von der jeweiligen Belastung unabhängige, verzerrungsarme Führung der Warenbahn - z.B. einer Papier- oder Textilbahn - erzielt und/oder deren Verweilzeit im Pressspalt so weit verlängert werden, dass sich die Verwendung von elektrostatischen Hilfseinrichtungen erübrigt oder dass deren Gebrauch zumindest wesentlich eingeschränkt werden kann. Die erfindungsgemäss ausgeführte Presswalze ist besonders vorteilhaft für Druckwerke, da sie einerseits, z.B. bei Decordruck, auch bei Spaltbreiten von 8 bis 10 mm eine durch Laständerungen unbeeinflusste, konstante Breite des Druckstreifens gewährleistet, und andererseits eine entsprechende Verlängerung der für die Farbübertragung nutzbaren Verweilzeit der Druckfarbe in der Druckzone ermöglicht. Die ausgedehnte Verweilzeit ergibt dabei zusätzlich Spielraum für den Einsatz neuartiger Farbsysteme, welche z.B. eine längere Trockenzeit als bisherige Systeme erfordern. Die erfindungsgemässe Ausbildung der Presswalze gestattet auch eine entsprechende Verlängerung der Verweilzeit einer im Pressspalt zu verdichtenden und/oder mit einer Strukturierung, z.B. einer Prägung, zu versehenden Textilbahn.

Ausgestaltungen des Erfindungsgegenstandes sind in den abhängigen Ansprüchen angegeben. Ein Druckwerk mit einer erfindungsgemäss ausgebildeten Presswalze ist Gegenstand des Anspruchs 12. Eine mit einer erfindungsgemässen Presswalze ausgeführte Vorrichtung zum Behandeln einer Textilbahn ist Gegenstand des Anspruchs 13.

Die Erfindung wird anhand eines in der Zeichnung schematisch dargestellten Ausführungsbeispiels erläutert. Es zeigen:
- Fig.1: eine Teilansicht mit Teilschnitt einer mit einem Formzylinder zusammenwirkenden, erfindungsgemässen Presswalze eines Druckwerks,
- Fig.2: einen Schnitt der erfindungsgemässen Presswalze entsprechend der Linie II - II in Fig.1,
- Fig.3: einen Teilschnitt der Presswalze entsprechend der Linie III - III in Fig.1,
- Fig.4: eine Einzelheit aus der Fig.2 in einer grösseren Darstellung, und
- Fig.5: die Einzelheit in einer Teilansicht gemäss Pfeil V in Fig.4.

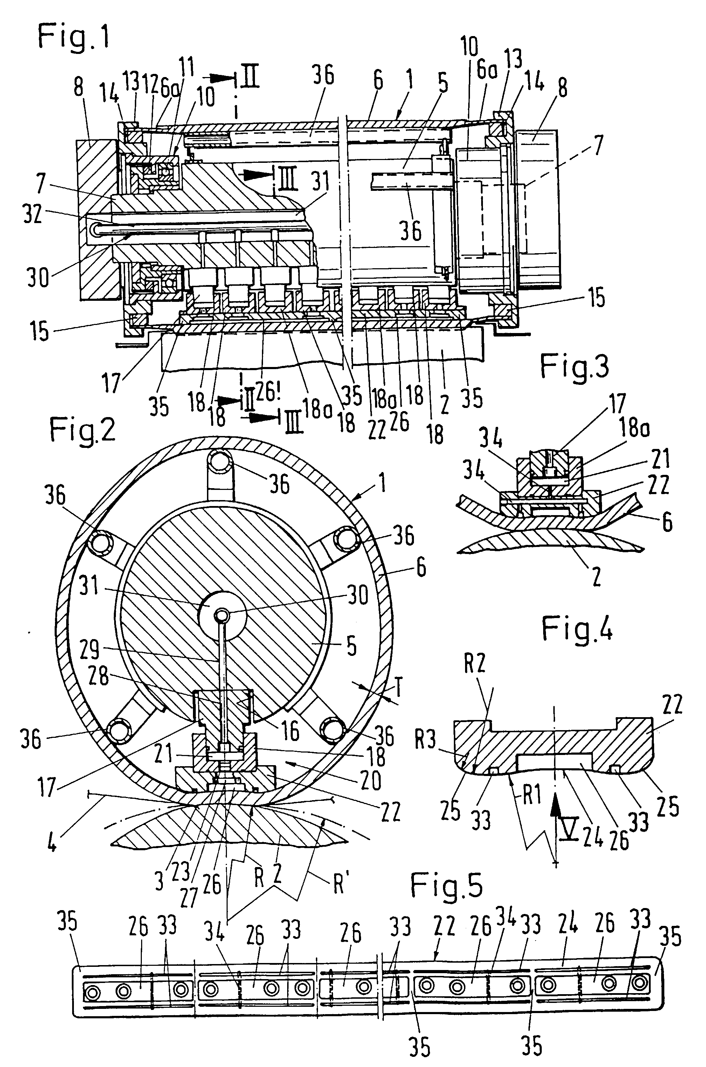

Die Presswalze 1 nach den Fig.1 und 2 ist als Presseurwalze in einem nicht dargestellten Druckwerk, beim vorliegenden Beispiel einem Tiefdruckwerk, angeordnet und wirkt mit einer Gegenwalze 2, darstellungsgemäss einem Formzylinder des Druckwerks in einer Druckzone 3 zusammen, durch welche eine zu bedruckende Papierbahn 4 geführt ist. Die Presswalze 1 enthält, wie z.B. aus der eingangs zitierten Literaturstelle bekannt, einen feststehenden Träger 5 und einen um diesen drehbaren Walzenmantel 6, der aus einem elastisch deformierbaren Material, z.B. aus einem Kunststoff, besteht. Der Walzenmantel 6 der erfindungsgemässen Presswalze 1 besteht zumindest teilweise aus einem elektrisch leitfähigen Material, beim dargestellten Beispiel aus einem Elastomer, welches mit einer isolierenden Innenschicht und einer als "Halbleiter" ausgebildeten Aussenschicht ausgeführt ist. Das Elastomer kann auch, z.B. durch ein Gewebe, verstärkt sein.

Gemäss Fig.1 ist der Träger 5 an seinen beiden Enden mittels Lagerzapfen 7 in Haltblöcken 8 befestigt, welche je auf einem nicht dargestellten Träger des Druckwerks angebracht sind. Ueber Lageranordnungen 10, welche Wälzlager 11 und Dichtungsmittel 12 enthalten, sind Tragringe 13 auf den Lagerzapfen 7 drehbar gelagert. Die Tragringe 13 sind mit ringförmigen Nuten 14 ausgeführt, in welchen die Enden 6a des Walzenmantels 6 je mittels eines Spannrings 15 befestigt sind.

Der Träger 5 ist mit einer Längsnut 16 ausgeführt, in welcher eine Reihe kolbenförmiger Führungselemente 17 einer hydrostatischen Stützanordnung 20 feststehend angebracht sind. Die Stützanordnung 20 enthält eine entsprechende Anzahl zylinderförmiger Stützelemente 18, 18a, welche je mit einem der Führungselemente 17 beweglich und dichtend zusammenwirken und einen Druckraum 21 begrenzen. Die Stützanordnung 20 enthält ferner einen leistenförmigen Stützteil 22, der mit allen Stützelementen 18, 18a gekoppelt ist und sich im wesentlichen über die Arbeitslänge des Walzenmantels 6 erstreckt und der mittels Schrauben 23 an den Stützelementen 18 befestigt ist.

Wie insbesondere aus den Fig.2 und 3 hervorgeht, ist der Walzenmantel 6 mit einer in radialer Richtung flexiblen Wandung ausgeführt, welche ein Anschmiegen des Walzenmantels 6 an die Gegenwalze 2 über einen Umfangsabschnitt gestattet, dessen Breitenabmessung in Umfangsrichtung beispielsweise 20 mm beträgt. Je nach Material und Wandstärke T des Walzenmantels 6 kann ein Mehrfaches dieser Breitenabmessung erzielt werden. Andererseits kann es, z.B. bei Decordruck, auch sinnvoll sein, den Walzenmantel 6 und die Gegenwalze 2 auf einem Umfangsabschnitt mit wesentlich geringerer Breitenabmessung, z.B. 8 bis 10 mm, zusammenzuführen.

Der Stützteil 22 ist mit einer konkaven Stützfläche 24 ausgeführt, deren Form gemäss Fig.4 durch einen Radius R1 bestimmt ist, welcher im wesentlichen der Summe aus dem Radius R der Gegenwalze 2 und der Wandstärke T des Walzenmantels 6 entspricht. Um einen universellen Einsatz der Presswalze 1 zu gewährleisten, welche mit Gegenwalzen 2 unterschiedlicher Durchmesser bzw. Radien R und R' zusammenwirken soll, ist es zweckmässig, wenn der Radius R1 der Stützfläche 24 auf den Radius R der kleinsten einzusetzenden Gegenwalze 2 abgestimmt wird. An mindestens einer Längsseite des Stützteils 22, darstellungsgemäss an beiden Längsseiten, sind der konkaven Stützfläche 24 zwei in Umfangsrichtung benachbarte, konvex ausgebildete Führungsflächen 25 zugeordnet, deren Form durch einen Radius R2 bestimmt ist, der gleich oder kleiner ist als der Radius einer durch die Innenfläche des Walzenmantels 6 bestimmten Zylinderfläche. Diese konvexen Führungsflächen 25 erleichtern die Einführung des Walzenmantels 6 bei seiner Rotationsbewegung in die zwischen der Stützfläche 24 und der Gegenwalze 2 gebildete Pressstelle.

Die Stützfläche 24 des Stützteils 22 ist mit hydrostatischen Lagertaschen 26 für eine hydrostatische Schmierung versehen. Die Lagertaschen 26 sind durch in den Schrauben 23 vorgesehene Drosselbohrungen 27 mit den Druckräumen 21 der Stützelemente 18 verbunden. Die Druckräume 21 sind je über den Führungsteil 17 und den Träger 5 durchsetzende Bohrungen 28 bzw. 29 an ein Zuführsystem 30 für ein hydraulisches Druckmittel angeschlossen. Das Zuführsystem 30 ist in einer zentralen Längsbohrung 31 des Trägers 5 angeordnet und beim dargestellten Beispiel durch eine die Längsbohrung 31 durchsetzende Rohrleitung 32 angedeutet, welche an eine nicht dargestellte Quelle des hydraulischen Druckmittels angeschlossen ist.

Durch die Stützanordnung 20 und die beschriebene Ausbildung des Stützteils 22 wird neben einem Durchbiegungsausgleich ein im wesentlichen konstanter hydrostatischer Schmierspalt zwischen der Stützfläche 24 und der Innenfläche des Walzenmantels 6 eingehalten. Wie insbesondere aus den Fig.3 und 4 hervorgeht, können auch in den Führungsflächen 25 hydrostatische Lagertaschen 33 ausgebildet sein, durch welche eine seitliche Stabilisierung des Stützteils 22 erzielbar ist. Die Lagertaschen 33 sind durch über die Länge des Stützteils 22 verteilt angeordnete Drosselbohrungen 34 an die Druckräume 21 der entsprechend positionierten Stützelemente 18a angeschlossen.

Wie insbesondere aus den Fig.1 und 5 hervorgeht, sind die Lagertaschen 26 und 33 in Längsrichtung des Stützteils 22 je durch Stegpartien 35 der Führungsfläche 24 begrenzt. Anstelle der dargestellten Ausführung mit mehreren Lagertaschen 26 und 33 kann auch eine Ausführung mit einer einzigen, über die Länge des Stützteils 22 durchlaufenden Lagertasche 26 und/oder mit entsprechend durchlaufenden Lagertaschen 33 vorgesehen sein, welche lediglich durch die in den Endabschnitten des Führungsteils 22 ausgebildeten Stegpartien 35 begrenzt sind.

Es ist auch eine Ausführung möglich, bei der sich der Stützteil 22 nur über einen Teil der Arbeitslänge des Walzenmantels 6 bzw. über einen Teil der Stützelemente 18 erstreckt. Es können auch mehrere, in Längsrichtung nebeneinander angeordnete, je mit einem Teil der Stützelemente 18 verbundene Stützteile 22 vorgesehen sein. Ferner können auch Stützelemente 18 mit konkaven Stützflächen 24 ausgeführt sein und direkt mit dem Walzenmantel 6 zusammenwirken, wobei sich die Anordnung eines leistenförmigen Stützteils 22 erübrigt. Zur Beeinflussung des Druckverlaufs können die oder einzelne Lagertaschen 26 und 33 der Stützanordnung 20 auch mit einer nicht dargestellten Einrichtung zur hydrodynamischen Druckunterstützung kombiniert sein, wodurch die Lagertaschen 26 mit kleineren Abmessungen ausgeführt werden können.

Der Träger 5 ist mit mindestens einem Führungsteil, darstellungsgemäss mit fünf gegenüber der Stütz anordnung 20 in Umfangsrichtung versetzten Führungsteilen 36 in Form von Stützträgern für die Innenfläche des Walzenmantels 6 versehen. Die Führungsteile 36 sind nur in den Endbereichen des Trägers 5 abgestützt, so dass sie Durchbiegungen des Trägers 5 zulassen und zugleich eine formstabile Führung des Walzenmantels 6 gewährleisten. Nach einer anderen, nicht dargestellen Ausführungsform können entsprechende Führungsteile 35 mit den Lageranordnungen 10 gekoppelt sein. Anstelle von Stützträgern kann auch ein über einen Teil des Umfangs der Innenfläche des Walzenmantels 6 verlaufender, z.B. wannenartiger Führungsteil, vorgesehen sein.

Eine Presswalze 1 nach den Fig.1 und 2 kann auch als Arbeitswalze einer nicht dargestellten Vorrichtung zum Behandeln, z.B. Verdichten oder Prägen einer Warenbahn, etwa eines Gewebes oder eines non-woven Artikels, vorgesehen sein. Als Gegenwalze 2 kann eine Führungswalze mit glatter Mantelfläche oder eine Prägewalze mit einer entsprechend strukturierten Mantelfläche vorgesehen sein. Entsprechend kann auch bei einer derartigen Ausführung die Verweilzeit der Warenbahn in der Wirkzone verlängert, eine unkontrollierte elektrostatische Aufladung der Mantelfläche vermieden und damit die Bearbeitung von empfindlichen, z.B. einen Kunststoffanteil enthaltenden Textilbahnen vereinfacht werden.

Zusammenfassend lässt sich die Erfindung wie folgt beschreiben:

Die Presswalze enthält einen feststehenden Träger und einen rotierenden, elastisch verformbaren Walzenmantel, der mit einer Gegenwalze zusammenwirkt und der über eine hydrostatische Stütz anordnung auf dem Träger abgestützt und mit seiner Innenfläche über eine konkave Stützfläche in Umfangsrichtung beweglich geführt ist. Der Walzenmantel ist mit einer in radialer Richtung flexiblen Wandung ausgeführt, welche an die Gegenwalze auf einer Pressstelle anschmiegbar ist, deren Breitenabmessung in Umfangsrichtung innerhalb eines Bereiches von mindestens 8 mm bis ca. 40 mm einstellbar ist. Der Walzenmantel besteht ferner zumindest teilweise aus einem elektrisch leitfähigen Material, um eine unkontrollierte elektrostatische Aufladung der Manteloberfläche zu verhindern. Entsprechend wird eine von elektrostatischen Hilfseinrichtungen freie oder zumindest unter reduzierter elektrostatischer Aufladung erzielbare Behandlung einer Warenbahn, z.B. eine vereinfachte Uebertragung von Druckfarbe auf ein Druckgut, erreicht.

## Patentansprüche

1. Presswalze mit einem feststehenden Träger (5) und einem um diesen drehbaren, elastisch verformbaren Walzenmantel (6), welcher zum Zusammenwirken mit einer Gegenwalze (2) bestimmt ist und welcher über eine Stützanordnung (20) gegen den Träger (5) beweglich abstützbar und mit seiner Innenfläche über eine Stützfläche (24) in Umfangsrichtung beweglich geführt ist,
dadurch gekennzeichnet, dass der Walzenmantel (6) mit einer in radialer Richtung flexiblen Wandung ausgeführt ist, welche an die Gegenwalze (2) über einen Umfangsabschnitt anschmiegbar ist, dessen Breitenabmessung in Umfangsrichtung innerhalb eines Bereiches von mindestens 8 mm bis ca. 40 mm einstellbar ist, und dass der Walzenmantel (6) zumindest teilweise aus einem elektrisch leitfähigen Material besteht, um eine unkontrollierte elektrostatische Aufladung der Manteloberfläche zu verhindern.

2. Presswalze nach Anspruch 1, dadurch gekennzeichnet, dass die Stützfläche (24) in Umfangsrichtung des Walzenmantels (6) konkav ausgebildet ist.

3. Presswalze nach Anspruch 2, dadurch gekennzeichnet, dass die Stützfläche (24) eine Form aufweist, welche durch einen Radius (R1) bestimmt ist, der im wesentlichen der Summe aus dem Radius (R) der Umfangsfläche der kleinsten, mit der Presswalze (1) zusammenwirkenden Gegenwalze (2) und der Dicke (T) des Walzenmantels (6) entspricht.

4. Presswalze nach Anspruch 2 oder 3, dadurch gekennzeichnet, dass der Stützfläche (24) mindestens eine in Umfangsrichtung benachbarte, konvex ausgebildete Führungsfläche (25) zugeordnet ist, deren Form durch einen Radius (R2) bestimmt ist, der gleich oder kleiner ist als der Radius einer durch die Innenfläche des Walzenmantels (6) bestimmten Zylinderfläche.

5. Presswalze nach einem der vorangehenden Ansprüche, deren Stützanordnung (20) mehrere, in Längsrichtung des Trägers (5) nebeneinander angeordnete hydrostatische Stützelemente (18) enthält, dadurch gekennzeichnet, dass die Stützfläche (24) auf mindestens einem Stützteil (22) ausgebildet ist, welcher auf dem Träger (5) über die Stützelemente (18) abgestützt ist.

6. Presswalze nach Anspruch 5, dadurch gekennzeichnet, dass der Stützteil (22) in Form einer Tragleiste ausgeführt ist, die sich im wesentlichen über eine vorbestimmbare Arbeitslänge des Walzenmantels (6) erstreckt.

7. Presswalze nach einem der vorangehenden Ansprüche, dadurch gekennzeichnet, dass die Stützfläche (24) und/oder die Führungsfläche (25) je mindestens eine hydrostatische Lagertasche (26 bzw. 33) aufweisen, welche in Längsrichtung des Trägers (5) durch mindestens zwei Stegpartien (35) der Stützfläche (24) bzw. der Führungsfläche (25) begrenzt ist.

8. Presswalze nach einem der vorangehenden Ansprüche, dadurch gekennzeichnet, dass der Träger (5) mit mindestens einem, gegenüber der Stützanordnung (20) in Umfangsrichtung versetzt angeordneten, über einen Teil seiner Längserstreckung verlaufenden Führungsteil (36) für die Innenfläche des Walzenmantels (6) versehen ist.

9. Presswalze nach Anspruch 8, dadurch gekennzeichnet, dass der Führungsteil (36) in Form eines in den Endbereichen des Trägers (5) abgestützten, Durchbiegungen des Trägers (5) zulassenden Stützträgers ausgeführt ist.

10. Verwendung einer Presswalze nach einem der vorangehenden Ansprüche als Presseurwalze in einem Druckwerk, insbesondere einem Tiefdruckwerk.

11. Verwendung einer Presswalze nach einem der Ansprüche 1 bis 9 in einer Vorrichtung zum Behandeln einer Textilbahn.

12. Druckwerk mit einer Presswalze nach einem der Ansprüche 1 bis 9.

13. Vorrichtung zum Behandeln einer Textilbahn mit einer Presswalze nach einem der Ansprüche 1 bis 9.
